# FASCICULE DE BREVET EUROPEEN

(11) **EP 3 632 078 B1**
(45) Date de publication et mention de la délivrance du brevet: **12.07.2023**
(21) Numéro de dépôt: 18736975.6
(22) Date de dépôt: 18.05.2018
(51) Int. Cl.: H04L 65/1073, H04L 65/1106

(54) **PROCÉDÉ DE CONTRÔLE D'UNE COMMUNICATION COMPRENANT DES TRANSACTIONS MULTIPLES**
VERFAHREN ZUR STEUERUNG EINER KOMMUNIKATION MIT MEHREREN TRANSAKTIONEN
METHOD FOR CONTROLLING A COMMUNICATION COMPRISING MULTIPLE TRANSACTIONS

(30) Priorité: 23.05.2017 FR 1754569
(43) Date de publication de la demande: 08.04.2020
(73) Titulaire: Orange, 92130 Issy-les-Moulineaux (FR)
(72) Inventeur: DOREE, Jos, 92326 Ch tillon Cedex (FR); LE ROUZIC, Jean-Claude, 92326 Ch tillon Cedex (FR)
(86) Numéro de dépôt international: PCT/FR2018/051209
(87) Numéro de publication internationale: WO 2018/215719

(56) Documents cités:
- WO-A1-2016/185118
- US-A1- 2003 212 912
- ROACH A B: "RFC 3265: Session Initiation Protocol (SIP) - Specific Event Notification", NETWORK WORKING GROUP REQUEST FOR COMMENTS, XX, XX, 1 juin 2002 (2002-06-01), pages 1-38, XP002280672,

## Description

La présente invention concerne les réseaux de communications de type IP (« *Internet Protocol* »), et notamment ceux parmi les réseaux IP qui sont aptes à mettre en oeuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les moyens mis en place dans un réseau IP pour appliquer une temporisation sur un ensemble de transactions entre deux dispositifs-clients, ou entre un dispositif-client et un serveur, ou encore entre deux serveurs, lorsque ces transactions sont logiquement liées entrent-elles.

Ces « dispositifs-clients » peuvent être, par exemple, un terminal fixe ou mobile, ou une passerelle soit domestique (« *Residential Gateway* » en anglais) soit située dans une entreprise. Par souci de brièveté, on utilisera fréquemment ci-dessous le terme générique de « terminal d'utilisateur », ou de « terminal » tout court, pour désigner ces divers équipements.

Les protocoles de contrôle de session évolués classiques, tels que le protocole SIP (initiales des mots anglais « *Session Initiation Protocol* » signifiant « Protocole d'initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension définit des procédures de notification d'événements.

Le protocole SIP est utilisé en particulier dans les infrastructures de type IMS (initiales des mots anglais « *IP Multimedia Subsystem* » signifiant « Sous-système Multimédia sur IP »). L'IMS a été défini par l'organisme de normalisation 3GPP (« *Third Génération Partnership Project* ») et TISPAN *(« Télécommunications and Internet Converged Services and Protocols for Advanced Networking* »). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en oeuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Lorsque donc un usager souhaite bénéficier des services offerts par un réseau IMS, il émet vers le réseau des messages de signalisation pouvant inclure notamment divers types de requêtes.

Tout d'abord, le dispositif-client de l'usager doit, sauf exceptions (telles que certains appels d'urgence), s'enregistrer sur le réseau. Lorsque le réseau est incapable de faire le lien entre cet enregistrement et un enregistrement précédent (par exemple suite à une panne réseau, ou suite à un arrêt du dispositif-client pendant une durée supérieure à une valeur prédéterminée), l'enregistrement est considéré comme étant un enregistrement initial. Après un enregistrement initial, le dispositif-client de l'usager doit envoyer périodiquement au réseau une requête pour confirmer qu'il souhaite maintenir son enregistrement.

Pour pouvoir enregistrer les dispositifs-clients, les réseaux IMS comprennent un ou plusieurs serveurs d'enregistrement, appelés « S-CSCF » (initiales des mots anglais « *Serving-Call Server Control Function* » signifiant « Fonction de Commande de Session d'Appel Serveuse »), aptes (entre autres fonctions) à gérer la procédure d'enregistrement des dispositifs connectés au réseau.

Les réseaux IMS comprennent en outre un ou plusieurs serveurs d'interrogation, appelés « I-CSCF » (initiales des mots anglais « *Interrogating-Call Server Control Function* » signifiant « Fonction de Commande de Session d'Appel Interrogatrice ») - d'ailleurs souvent combinés physiquement avec les serveurs d'enregistrement S-CSCF pour constituer des serveurs d'appel dénotés « I/S-CSCF » - qui, au moment de l'enregistrement d'un dispositif-client, interrogent un serveur de données d'abonné appelé « HSS » (initiales des mots anglais « *Home Subscriber Server* » signifiant « Serveur d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'usager. Les serveurs HSS contiennent chacun une base de données-clients, et sont donc l'équivalent dans les réseaux IP des serveurs « HLR » (initiales des mots anglais « *Home Location Register* » signifiant « Registre de Localisation de Rattachement ») utilisés dans les réseaux GSM. Chaque serveur HSS contient le « profil » d'un certain nombre de dispositifs-clients du réseau, ce profil comprenant leur état d'enregistrement, des données d'authentification et de localisation, et les services auxquels il a droit.

En effet, après qu'un serveur S-CSCF lui a été ainsi attribué, chaque utilisateur peut faire usage d'un certain nombre de services pendant la session en cours. Il peut par exemple s'agir de services offerts automatiquement à tous les utilisateurs du réseau IMS. Il peut aussi s'agir de services auxquels cet utilisateur a souscrit auprès de l'opérateur du réseau, et qui sont mis automatiquement à sa disposition. Enfin, il peut s'agir de services dont l'utilisateur peut faire usage après avoir émis une requête appropriée (SIP SUBSCRIBE).

Ces services comprennent des applications audiovisuelles telles que mentionnées ci-dessus. Il peut s'agir également d'une souscription à l'état d'une ressource réseau, auquel cas des notifications d'évènement (SIP NOTIFY) sont envoyées au dispositif-client dès lors que l'état de la ressource change ; par exemple, lorsque l'utilisateur d'un dispositif-client dispose d'une boîte vocale sur le réseau, il pourra être informé chaque fois qu'un message a été enregistré sur cette boîte vocale ; un utilisateur peut, de même, demander à être notifié de l'état d'enregistrement de son propre dispositif-client.

Les réseaux IMS comprennent en outre un ou plusieurs serveurs appelés « P-CSCF » (initiales des mots anglais « *Proxy-Call Server Control Function »* signifiant « Fonction de Commande de Session d'Appel Mandataire »). Pour chaque dispositif-client connecté à un réseau IMS, il existe un serveur P-CSCF servant d'entité de raccordement entre le coeur de réseau IMS et le réseau d'accès utilisé par ce dispositif-client ; ainsi, toute la signalisation SIP échangée entre le dispositif-client d'une part, et le serveur d'interrogation I-CSCF ou le serveur d'enregistrement S-CSCF d'autre part, passe par le serveur P-CSCF.

La présente invention concerne les situations où une certaine transaction T2 est normalement attendue à la suite d'une première transaction T1. Une « transaction » est définie par un ensemble de messages échangés entre un premier dispositif communicant donné et un second dispositif communicant donné, le premier message dudit ensemble étant d'un type donné. Dans de nombreux cas (mais pas dans tous les cas auxquels s'applique l'invention), ces transactions logiquement liées entre elles partagent la même référence d'appel (même « Call-Id » dans le protocole SIP).

Lesdits « types » de message peuvent être très variés, par exemple une requête d'enregistrement (méthode « REGISTER » en SIP), une requête de souscription (méthode « SUBSCRIBE » en SIP), une requête de notification d'évènement (méthode « NOTIFY » en SIP), une requête d'établissement de session (méthode « INVITE » en SIP), une requête d'annulation d'établissement de session (méthode « CANCEL » en SIP), une requête de modification de l'état d'une session (méthode « UPDATE » en SIP), ou une requête de fin de session (méthode « BYE » en SIP).

S'il existe bien des mécanismes de temporisation normalisés qui sont spécifiques à une transaction donnée, il n'existe pas de mécanisme de contrôle qui permette d'appliquer une temporisation sur un *ensemble* de transactions. Or ceci peut s'avérer fort utile dans différents cas d'usage afin de parer à un dysfonctionnement, auquel cas on pourra par exemple libérer des ressources inutiles, renouveler une demande ou déclencher des actions complémentaires adéquates.

On va illustrer à présent, sur la base de plusieurs exemples, l'utilité d'un tel mécanisme de contrôle.

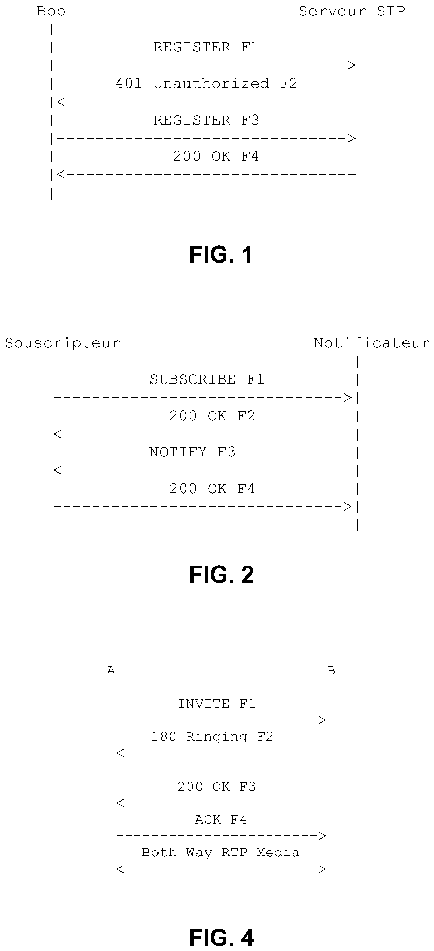

Considérons, selon un premier exemple illustré sur la **figure 1**, les échanges de messages au cours d'une procédure d'enregistrement.

Dans cet exemple, la transaction T1 est représentée par les échanges F1/F2, la transaction T2 par les échanges F3/F4. Conformément au protocole SIP, la transaction T2 doit permettre à Bob de fournir le résultat du calcul d'authentification en utilisant les données fournies par le serveur SIP à l'étape F2.

Cependant, lorsque la transaction T1 s'est effectuée, le serveur SIP attend la transaction T2 pendant un certain temps, mais pas au-delà ; en effet, le serveur SIP ne conserve pas indéfiniment les données temporaires nécessaires à l'authentification. Il y a donc un délai maximum d'attente de la transaction T2, au-delà duquel le serveur SIP ne pourra pas prendre en compte la requête de l'étape F3 car les données temporaires auront été supprimées. Les transactions T1 et T2 sont donc liées par une temporisation pluri-transactionnelle gérée par le serveur SIP.

Si Bob avait connaissance du délai maximum de rétention des données temporaires dans le serveur SIP, il saurait à l'expiration de cette temporisation qu'il ne faut plus émettre la requête de l'étape F3, mais renouveler l'étape F1. Si en revanche Bob n'a pas connaissance de ce délai, et transmet la requête de l'étape F3 hors délai, le serveur SIP répondra par un message d'erreur ; à l'inverse, si Bob, suite à un changement de type d'accès, relance une procédure complète d'enregistrement en émettant la requête de l'étape F1 alors que le serveur est en attente de la requête de l'étape F3, Bob court le risque que cette tentative de réenregistrement soit rejetée ; dans les deux cas, des effets de bord plus ou moins bien maîtrisés peuvent en découler pour Bob, comme un délai global dans l'enregistrement, des difficultés d'allocation de ressources IPsec (Internet Protocol Security) ou TLS (Transport Layer Security), ou même une boucle perpétuelle.

Des problèmes analogues peuvent se poser dans le cas d'une procédure d'authentification auprès d'un serveur mandataire (proxy SIP), dans laquelle les messages des étapes F1 et F3 sont des requêtes INVITE, et la réponse de l'étape F2 est une demande d'authentification 407. De la même manière, le proxy SIP conserve temporairement les données fournies dans la réponse de l'étape F2 ; au-delà d'un certain délai, la requête de l'étape F3 sera rejetée par le proxy SIP.

Selon un deuxième exemple illustré sur la **figure 2****,** on considère les échanges de messages au cours d'une procédure de souscription.

Dans cet exemple, la transaction T1 (F1/F2, où F1 est une étape d'émission d'une requête SUBSCRIBE) entraîne une transaction T2 (F3/F4), qui donne l'état courant de la souscription. Si au-delà d'un certain délai, la notification de l'étape F3 ne parvient pas au souscripteur, c'est qu'il y certainement eu un incident ; il faut alors pouvoir renouveler la tentative en libérant la transaction T1, et en lançant une nouvelle requête SUBSCRIBE. Or cette indication de délai pourrait être fournie par le notificateur dans la réponse de l'étape F2.

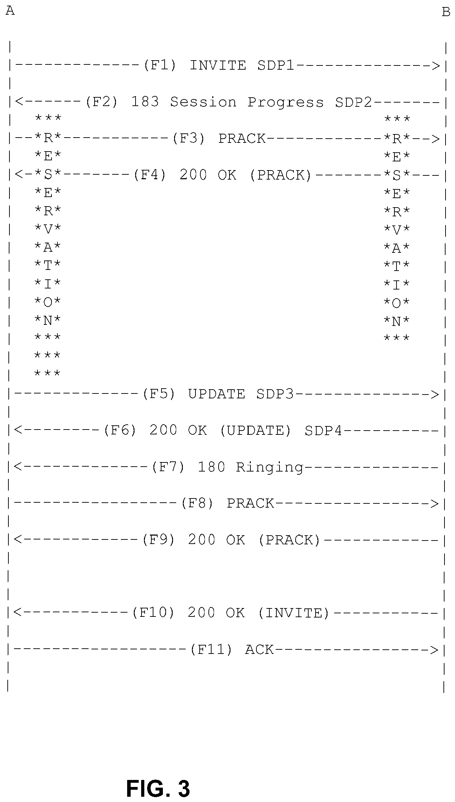

Selon un troisième exemple illustré sur la **figure 3****,** on considère une séquence de préconditions selon le document RFC 3312 (ces préconditions exigent de la part d'un participant à une communication qu'il mette en oeuvre, avant d'entrer en session, l'un des mécanismes normalisés de réservation de ressources). Les agents SIP désignés par A et B sur cette figure peuvent être chacun un terminal ou un serveur.

Dans cette séquence, plusieurs transactions sont dépendantes :
- la transaction T1 est représentée par les messages F1, F2, F7 et F10,
- la transaction T2 (F3/F4) est déclenchée par la réception de F2,
- la transaction T3 (F5/F6) est déclenchée par la réception de F2 et la réservation réussie de ressources réseau.

On rappelle que selon les normes SIP, un message PRACK est un accusé de réception envoyé en réponse à une réponse provisoire. C'est ici le cas pour les messages F3, F4, F8 et F9.

L'absence des transactions T2 ou T3 équivaut à un échec de la réservation de ressources, et donc à un échec de l'appel. Or, dans les normes actuelles, il n'existe aucune temporisation pour indiquer par exemple à B un délai maximum d'attente de l'étape F5, délai au-delà duquel B est fondé à abandonner la procédure et à libérer des ressources. Par exemple, dans le cas de l'utilisation de cette procédure pour un appel de Voix sur IP, la réception par A de cette erreur signalée par B pourrait permettre à A de basculer immédiatement la communication vers le domaine circuit.

Selon un quatrième exemple illustré sur la **figure 4****,** on considère l'établissement d'une communication multimédia utilisant le protocole Real-Time Transport Protocol (RTP) (qui permet le transport de données soumises à des contraintes de temps réel, tels que des flux média audio ou vidéo) entre deux agents SIP A et B.

La séquence illustrée sur la figure 4 est la séquence classique d'établissement d'une telle communication. Il peut être souhaitable pour le réseau de ne pas laisser indéfiniment des ressources disponibles pour cette communication. Si dans la réponse « 200 OK » de l'étape F3, l'agent B pouvait indiquer une durée maximum de dialogue, l'agent A pourrait mettre fin à la session par un BYE pour libérer les ressources. Cette situation est susceptible de se produire par exemple si la procédure de libération des ressources par le réseau échoue (en raison d'une perte de contexte par exemple).

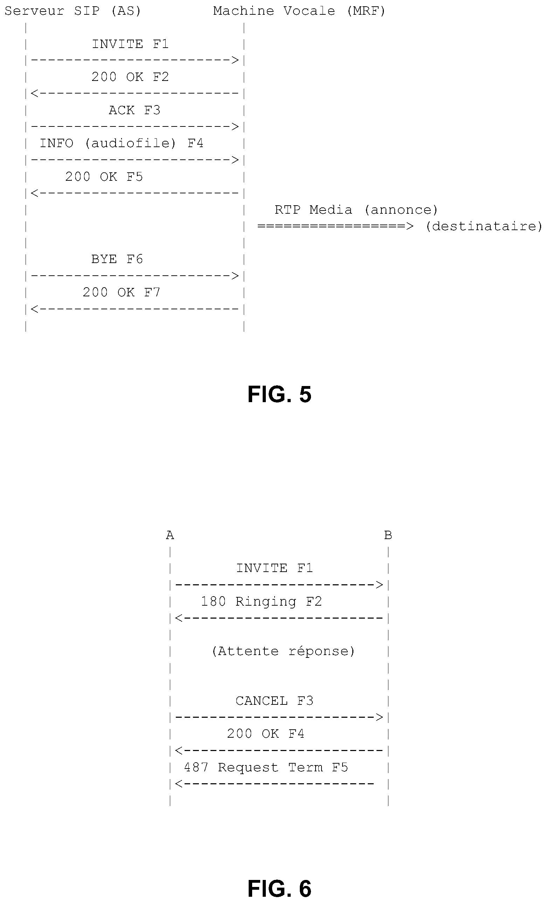

Selon un cinquième exemple illustré sur la **figure 5****,** on considère un service d'annonce vocale.

La séquence illustrée sur la figure 5 est la séquence classique au cours de laquelle un serveur SIP (par exemple de type « Application Server », noté AS sur la figure) commande auprès d'un équipement spécialisé (« Media Resource Function », noté MRF sur la figure) la diffusion d'une annonce vocale vers un client tiers (non représenté). Dans ce cas d'usage, il est généralement souhaitable de limiter la durée de diffusion de l'annonce. Les transactions initiées aux étapes F1 (INVITE) et F6 (BYE) sont alors liées par ce délai maximum de diffusion.

Dans le cas général, c'est le serveur SIP qui maîtrise cette temporisation, en lien avec l'état de la session avec le client tiers. Cependant, il peut être avantageux de diffuser la valeur de la temporisation vers la machine vocale dans la requête INVITE (F1). De cette manière, si pour une raison quelconque (par exemple le redémarrage du serveur, ou une panne réseau), le BYE de l'étape F6 n'est pas reçu par la machine vocale, celle-ci pourra prendre les mesures appropriées (libération de ressources, ou émission d'un BYE à son initiative).

Selon un sixième exemple illustré sur la **figure 6****,** on considère l'activation d'un service de renvoi sur non-réponse entre deux agents SIP A et B (où, par exemple, l'agent A est le Serveur d'Applications Téléphoniques qui est en charge d'un terminal B).

De manière classique, l'agent A gère une temporisation qui permet d'attendre l'éventuel décrochage de l'agent B avant de procéder au renvoi vers une nouvelle destination.

Normalement, c'est l'agent A qui émet la requête CANCEL (étape F3) déclenchant la fin de la sonnerie à l'échéance de la durée d'attente. Cependant, il peut être avantageux de diffuser la valeur de la temporisation vers l'agent B dans la requête INVITE (étape F1). De cette manière, si l'appel n'aboutit pas à un décrochage et si, pour une raison quelconque (par exemple le redémarrage du serveur, ou une panne réseau), la requête CANCEL (étape F3) n'est pas reçue par l'agent B, ce dernier pourra prendre les mesures appropriées (par exemple l'arrêt de la sonnerie, ou l'émission d'une réponse négative à la requête INVITE).

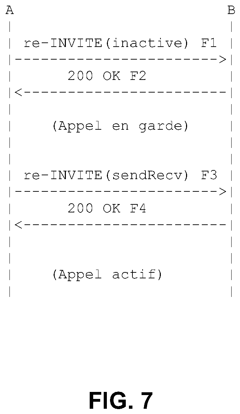

Selon un septième exemple illustré sur la **figure 7****,** on considère une communication entre deux agents SIP A et B, et une séquence pour mettre la communication en garde.

Lors de la mise en garde d'un appel, il est souhaitable que la durée de mise en garde soit limitée. Dans ce cas, les transactions initiées aux étapes F1 et F3 sont liées.

Il peut être avantageux de diffuser la valeur de la temporisation vers l'agent B mis en garde dans le re-INVITE de l'étape F1. De cette manière, s'il n'y a pas de libération du dialogue, ni levée de la garde au bout d'un certain délai, c'est-à-dire pas de re-INVITE selon l'étape F3 (ni de BYE), l'agent B pourra prendre les mesures appropriées (par exemple émission d'un BYE, ou libération des ressources).

Le document WO 2016/185118 décrit un procédé de contrôle d'une session relative à un service.

Le document US 2003/0212912 décrit un procédé pour sélectionner une durée temporelle dans une association de sécurité entre un équipement utilisateur et une entité de contrôle dans un système de communication.

La présente invention concerne donc, selon un premier aspect, un procédé de contrôle relatif à une communication entre deux dispositifs, dans lequel le protocole de ladite communication comprend au moins une transaction, dite première transaction, et au moins une transaction ultérieure, dite seconde transaction. Ledit procédé comprend les étapes suivantes :
- l'un desdits dispositifs, dit premier dispositif, transmet au cours de ladite première transaction à l'autre dispositif, dit second dispositif, un délai maximum acceptable entre la fin de la première transaction et le début de ladite seconde transaction, ainsi qu'une indication explicite du type de message caractérisant ledit début de la seconde transaction, et
- ledit second dispositif déclenche un minuteur pour ledit délai.

On notera (comme illustré dans les exemples ci-dessus), que, en fonctionnement normal, selon l'application envisagée :
- le message caractérisant le début de la première transaction et le message caractérisant le début de la seconde transaction pourront être du même type ou de types différents, et
- le message caractérisant le début de la seconde transaction sera supposé être envoyé soit par ledit premier dispositif soit par ledit second dispositif.

Grâce à ces dispositions, si, pour une raison ou une autre, le message caractérisant le début de la seconde transaction n'est pas transmis dans ledit délai, le second dispositif pourra éventuellement appliquer sans attendre un traitement approprié. Ce traitement à appliquer par le second dispositif à l'expiration du délai peut être de nature très variée selon le contexte d'utilisation. Il peut s'agir par exemple de l'émission d'une nouvelle requête initiale d'enregistrement ou de souscription, ou de l'arrêt d'une annonce vocale ou d'une sonnerie, ou de la libération de ressources mises en jeu dans la communication.

On notera que l'invention prévoit, pour chaque application de l'invention, de transmettre, en plus d'une durée de temporisation, une indication *explicite* du type de message caractérisant le début de la deuxième transaction. L'invention propose ainsi, avantageusement, un mécanisme générique permettant d'éviter d'avoir à mettre en place, pour chaque application envisagée, une norme internationale (sur la base de laquelle une indication *implicite* du type de message caractérisant le début de la deuxième transaction pourrait suffire).

Selon des caractéristiques particulières, lorsque ladite communication est associée à au moins un dialogue, ledit second dispositif ne tient plus compte dudit délai si ledit dialogue est libéré par ledit premier dispositif (par exemple au moyen d'une requête BYE ou CANCEL dans le cas d'un dialogue initié par une requête INVITE) avant l'expiration de ce délai.

On rappelle à cet égard qu'une communication entre un premier et un second dispositifs est généralement associée à plusieurs dialogues, par exemple un premier dialogue entre le premier dispositif et un serveur P-CSCF du réseau origine, un deuxième dialogue entre ce serveur P-CSCF du réseau origine et un Serveur d'Applications du réseau origine, un troisième dialogue entre ce Serveur d'Applications du réseau origine et un Serveur d'Applications du réseau de destination, un quatrième dialogue entre ce Serveur d'Applications du réseau de destination et un serveur P-CSCF du réseau de destination, et enfin un cinquième dialogue entre ce serveur P-CSCF du réseau de destination et le second dispositif.

Grâce à ces dispositions, ledit traitement sera automatiquement annulé. On évite ainsi que le second dispositif n'entreprenne une action inutile, voire contraire à la libération dudit dialogue.

Selon d'autres caractéristiques particulières, ledit premier dispositif et ledit second dispositif comprennent des agents SIP, et ledit type de message caractérisant le début de la seconde transaction est une méthode SIP.

Grâce à ces dispositions, on bénéficie des avantages d'un protocole de contrôle de session évolué.

Selon un deuxième aspect, l'invention concerne divers dispositifs.

Elle concerne ainsi, premièrement, un dispositif communicant, dit premier dispositif, comprenant des moyens pour, lorsqu'il est en communication avec un autre dispositif communicant, dit second dispositif, le protocole de ladite communication comprenant au moins une transaction, dite première transaction, et au moins une transaction ultérieure, dite seconde transaction, transmettre au cours de ladite première transaction audit second dispositif un délai maximum acceptable entre la fin de la première transaction et le début de ladite seconde transaction, ainsi qu'une indication explicite du type de message caractérisant ledit début de la seconde transaction.

L'invention concerne aussi, deuxièmement, un dispositif communicant, dit second dispositif, comprenant des moyens pour, lorsqu'il est en communication avec un autre dispositif communicant, dit premier dispositif, le protocole de ladite communication comprenant au moins une transaction, dite première transaction, et au moins une transaction ultérieure, dite seconde transaction :
- recevoir au cours de ladite première transaction de la part dudit premier dispositif un délai maximum acceptable entre la fin de la première transaction et le début de ladite seconde transaction, ainsi qu'une indication explicite du type de message caractérisant ledit début de la seconde transaction, et
- déclencher un minuteur pour ledit délai.

Selon des caractéristiques particulières, ledit second dispositif comprend des moyens pour, lorsque ladite communication est associée à au moins un dialogue, ne plus tenir compte dudit délai si ledit dialogue est libéré par ledit premier dispositif avant l'expiration de ce délai.

Selon d'autres caractéristiques particulières, ledit premier dispositif ou ledit second dispositif comprend un agent SIP, et ledit type de message est une méthode SIP.

Selon encore d'autres caractéristiques particulières, ledit premier dispositif ou ledit second dispositif est hébergé dans un dispositif-client, ou dans un serveur.

Il va de soi qu'un même dispositif-client, ou un même serveur, peut héberger à la fois un premier dispositif et un second dispositif tels que décrits succinctement ci-dessus.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

Selon un troisième aspect, l'invention concerne un système de communication comprenant au moins un premier dispositif et au moins un second dispositif tels que décrits succinctement ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de contrôle succinctement exposé ci-dessus mises en oeuvre par le premier dispositif lorsque ces étapes sont exécutées sur un ordinateur, ou pour l'exécution des étapes du procédé de contrôle succinctement exposé ci-dessus mises en oeuvre par le second dispositif lorsque ces étapes sont exécutées sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente une procédure d'enregistrement,
- la figure 2 représente une procédure de souscription,
- la figure 3 représente une réservation de ressources,
- la figure 4 représente l'établissement d'une communication multimédia utilisant le protocole RTP,
- la figure 5 représente l'activation d'un service d'annonce vocale,
- la figure 6 représente l'activation d'un service de renvoi sur non-réponse,
- la figure 7 représente l'activation de la mise en garde d'un appel, et
- la figure 8 représente schématiquement un système pour la fourniture de services multimédia apte à mettre en oeuvre l'invention.

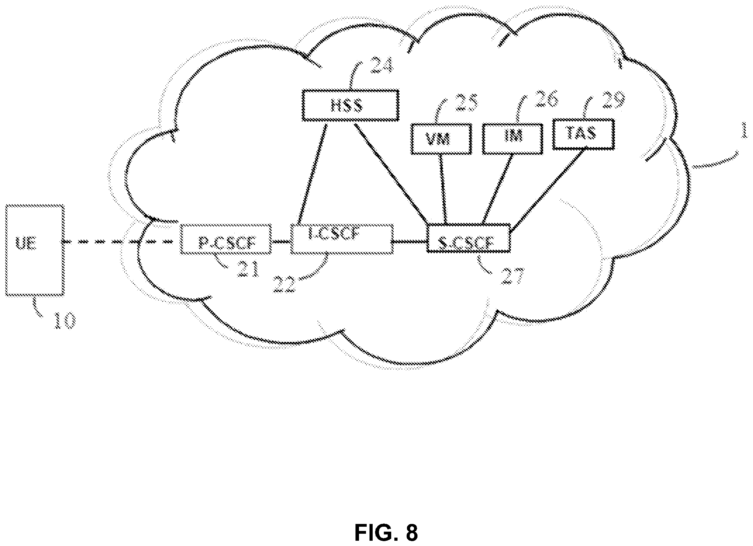

Bien que la présente invention concerne les réseaux IP en général, on va considérer à présent, à titre d'exemple de réalisation, une architecture de réseau de type IMS, telle que présentée succinctement ci-dessus. Cette architecture est illustrée sur la **figure 8****.**

Les services multimédia offerts par ce réseau IMS 1 peuvent comprendre des services de téléphonie, de vidéo-téléphonie, de partage de contenu (« *content-sharing* » en anglais), de Présence, de Messagerie Instantanée, ou de télévision. Ces services sont à la disposition de l'utilisateur d'un dispositif-client (« *User Equipment* », ou UE en anglais) 10 appartenant au réseau 1, qui permet au dispositif-client 10 d'échanger des flux multimédias et des signaux de contrôle de session conformes au protocole SIP, par exemple avec le dispositif-client (non représenté) d'un usager appartenant à un réseau SIP (non représenté) relié au réseau 1.

Le dispositif-client 10 peut être un terminal fixe ou mobile, ou une passerelle domestique ou d'entreprise, disposant de moyens de signalisation SIP et pouvant comprendre des moyens de restitution d'un contenu audiovisuel.

Comme le montre la figure 8, ce réseau IMS 1 comprend, outre une infrastructure de transport IP (non représentée) :
- au moins un serveur S-CSCF ; le serveur S-CSCF 27 gère notamment la procédure d'enregistrement des dispositifs connectés au réseau 1 ; le serveur S-CSCF 27 gère également le routage de la signalisation entre le dispositif-client 10 et les serveurs de messagerie vocale VM 25, de Messagerie Instantanée 26, et de téléphonie TAS 29 ;
- au moins un serveur I-CSCF ; le serveur I-CSCF 22 gère notamment le routage en direction d'autres terminaux gérés par le même réseau IMS 1 et le routage de la signalisation entre ce réseau IMS 1 et d'autres réseaux (non représentés) ;
- au moins un serveur P-CSCF ; le serveur P-CSCF 21 sert d'entité de raccordement entre le coeur de réseau IMS et le réseau d'accès utilisé par le dispositif-client 10 ;
- au moins un serveur de base de données, de type HSS ; le serveur HSS 24 contient le profil de l'utilisateur du dispositif-client 10 en termes de données d'authentification et de localisation, et de services souscrits ;
- au moins un serveur VM 25 de messagerie vocale (« *message-summary* » en anglais) ; le serveur VM 25 gère la souscription du dispositif-client 10 aux événements de dépôt/consultation des messages à l'intention du dispositif-client 10, et notifie le dispositif-client 10 lors de l'occurrence de ces événements ;
- au moins un serveur de Messagerie Instantanée IM 26 ; en cas de souscription de l'utilisateur de l'UE 10 au service de Messagerie Instantanée, cet utilisateur peut dialoguer « instantanément » en ligne avec d'autres abonnés à ce service ; et
- au moins un serveur de téléphonie TAS 29 ; le serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, de Messagerie Instantanée IM 26, et de téléphonie TAS 29 sont des exemples de Serveurs d'Applications (AS).

Certains services, comme ceux du serveur VM 25 et du serveur de Messagerie Instantanée IM 26, s'appuient sur la souscription du terminal 10 à des événements prédéterminés, comme expliqué ci-dessus.

La présente invention concerne une communication entre deux dispositifs, dans lequel le protocole de ladite communication comprend au moins une transaction, dite première transaction, et au moins une transaction ultérieure, dite seconde transaction.

Selon un mode de réalisation de l'invention, on met en oeuvre les étapes suivantes :
- l'un desdits dispositifs, dit premier dispositif, transmet au cours de ladite première transaction à l'autre dispositif, dit second dispositif, un délai maximum acceptable entre la fin de la première transaction et le début de ladite seconde transaction, ainsi qu'une indication explicite du type de message caractérisant ledit début de la seconde transaction, et
- ledit second dispositif déclenche un minuteur pour ledit délai.

Selon une application particulière, le « premier dispositif » et le « second dispositif » comprennent des agents SIP. Dans ce cas, selon une variante, le premier dispositif peut commodément utiliser un nouvel en-tête SIP, qui indique la durée maximum d'attente d'une nouvelle transaction pour la même référence d'appel (Call-Id). Cet en-tête pourrait par exemple être de la forme :

```
      Next-Transaction-Limit : method; delay
```

Ici, le paramètre « method » indique la méthode SIP caractérisant le début de la future transaction, et le paramètre « delay » indique la durée de temporisation.

Ainsi, dans le premier exemple, à l'étape F2, le serveur SIP peut introduire l'information :

```
      Next-Transaction-Limit : REGISTER ; 60
```

pour indiquer à Bob que les données temporaires d'authentification sont valables uniquement dans les 60 prochaines secondes. Au-delà, Bob devra réémettre une requête d'enregistrement initial. De même, dans le cas d'une mobilité entre deux réseaux d'accès, le terminal de Bob aura connaissance qu'il ne pourra émettre le REGISTER initial sur le nouvel accès qu'après avoir attendu 60 secondes.

Dans le deuxième exemple, à l'étape F2, le notificateur peut introduire l'information :

```
      Next-Transaction-Limit : NOTIFY ; 140
```

pour indiquer au souscripteur que s'il ne reçoit pas de notification (étape F3) dans un délai de 140 secondes, il devra supprimer la souscription courante et la renouveler.

Dans le troisième exemple, à l'étape F3, l'agent SIP A peut introduire l'information :

```
      Next-Transaction-Limit : UPDATE ; 10
```

dans le message PRACK de l'étape F3 afin d'indiquer à l'agent SIP B que si ce dernier ne reçoit pas de requête UPDATE (étape F5) dans les 10 secondes suivant la réception du message PRACK, l'agent B devra libérer les ressources par un code approprié (ce qui permettra à l'agent SIP A de transférer la communication vers le domaine circuit). Ce comportement pourrait également être appliqué pour limiter le délai de réception du message PRACK aux étapes F3 et F8.

Dans le quatrième exemple, à l'étape F3, l'agent B peut introduire l'information :

```
      Next-Transaction-Limit : BYE ; 43200
```

afin d'indiquer à l'agent A que si au bout de 12 h le dialogue n'a pas été libéré, l'agent A devra libérer la ressource avec un code approprié. Dans le même exemple, l'agent A peut fournir la même information à l'agent B à l'étape F4.

Dans le cinquième exemple, à l'étape F4, le serveur SIP peut introduire l'information :

```
      Next-Transaction-Limit : BYE ; 300
```

afin d'indiquer à la machine vocale que l'annonce doit être diffusée au maximum durant 5 minutes.

Dans le sixième exemple, à l'étape F1, l'agent A peut introduire l'information :

```
      Next-Transaction-Limit : CANCEL ; 30
```

afin d'indiquer à l'agent B que la durée d'attente de la requête CANCEL est au maximum de 30 secondes.

Dans le septième exemple, à l'étape F1, l'agent A peut introduire l'information :

```
      Next-Transaction-Limit : INVITE ; 300
```

afin d'indiquer à l'agent B que la durée de garde est au maximum de 5 minutes.

On notera que, dans les exemples décrits ci-dessus, les informations de temporisation ont été véhiculées dans un en-tête dédié. Mais d'autres formats sont évidemment possibles pour véhiculer ces informations. Ainsi, en variante, cette information peut être véhiculée dans le corps de message (« *body xml* » en anglais) d'une requête et/ou de la réponse à une requête.

De manière générale, la présente invention peut être mise en oeuvre au sein des noeuds d'un réseau IP, par exemple des dispositifs-clients ou des serveurs, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre d'étapes de l'un quelconque des procédés de contrôle selon l'invention.

En effet, l'invention vise aussi un programme d'ordinateur téléchargeable depuis un réseau de communication comprenant des instructions pour l'exécution d'étapes d'un procédé de contrôle selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter des étapes ou pour être utilisé dans l'exécution d'étapes de l'un quelconque des procédés de contrôle selon l'invention.

## Revendications

1. Procédé de contrôle relatif à une communication entre deux dispositifs, dans lequel le protocole de ladite communication comprend au moins une transaction, dite première transaction, et au moins une transaction ultérieure, dite seconde transaction, ledit procédé comprenant les étapes suivantes :
- l'un desdits dispositifs, dit premier dispositif, transmet au cours de ladite première transaction à l'autre dispositif, dit second dispositif, un délai maximum acceptable entre la fin de la première transaction et le début de ladite seconde transaction, et
- ledit second dispositif déclenche un minuteur pour ledit délai,
**caractérisé en ce que** ledit premier dispositif transmet en outre au cours de la dite première transaction au second dispositif une indication explicite du type de message caractérisant ledit début de la seconde transaction.

2. Procédé de contrôle selon la revendication 1, **caractérisé en ce que**, lorsque ladite communication est associée à au moins un dialogue, ledit second dispositif ne tient plus compte dudit délai si ledit dialogue est libéré par ledit premier dispositif avant l'expiration de ce délai.

3. Procédé de contrôle selon la revendication 1 ou la revendication 2, **caractérisé en ce que** ledit premier dispositif et ledit second dispositif comprennent des agents SIP (Session Initiation Protocol), et **en ce que** ledit type de message caractérisant le début de la seconde transaction est une méthode SIP.

4. Dispositif communicant, dit premier dispositif, comprenant des moyens pour, lorsqu'il est en communication avec un autre dispositif communicant, dit second dispositif, le protocole de ladite communication comprenant au moins une transaction, dite première transaction, et au moins une transaction ultérieure, dite seconde transaction, transmettre au cours de ladite première transaction audit second dispositif un délai maximum acceptable entre la fin de la première transaction et le début de ladite seconde transaction, **caractérisé en ce que** ledit premier dispositif comprend en outre des moyens pour transmettre au cours de la dite première transaction au second dispositif une indication explicite du type de message caractérisant ledit début de la seconde transaction.

5. Dispositif communicant, dit second dispositif, comprenant des moyens pour, lorsqu'il est en communication avec un autre dispositif communicant, dit premier dispositif, le protocole de ladite communication comprenant au moins une transaction, dite première transaction, et au moins une transaction ultérieure, dite seconde transaction :
- recevoir au cours de ladite première transaction de la part dudit premier dispositif un délai maximum acceptable entre la fin de la première transaction et le début de ladite seconde transaction, et
- déclencher un minuteur pour ledit délai,
**caractérisé en ce que** ledit second dispositif comprend en outre des moyens pour recevoir au cours de la dite première transaction de la part dudit premier dispositif une indication explicite du type de message caractérisant ledit début de la seconde transaction.

6. Dispositif communicant selon la revendication 5, **caractérisé en ce qu'**il comprend des moyens pour, lorsque ladite communication est associée à au moins un dialogue, ne plus tenir compte dudit délai si ledit dialogue est libéré par ledit premier dispositif avant l'expiration de ce délai.

7. Dispositif communicant selon l'une quelconque des revendications 4 à 6, **caractérisé en ce qu'**il comprend un agent SIP (Session Initiation Protocol), et **en ce que** ledit type de message est une méthode SIP.

8. Dispositif communicant selon l'une quelconque des revendications 4 à 7, **caractérisé en ce qu'**il est hébergé dans un dispositif-client.

9. Dispositif communicant selon l'une quelconque des revendications 4 à 7, **caractérisé en ce qu'**il est hébergé dans un serveur.

10. Système de communication, comprenant au moins un premier dispositif communicant selon la revendication 4, et au moins un second dispositif communicant selon la revendication 5 ou la revendication 6.

11. Moyen de stockage de données inamovible, ou partiellement ou totalement amovible, comportant des instructions de code de programme informatique pour l'exécution des étapes d'un procédé de contrôle selon l'une quelconque des revendications 1 à 3 mises en oeuvre par le premier dispositif, ou pour l'exécution des étapes d'un procédé de contrôle selon l'une quelconque des revendications 1 à 3 mises en oeuvre par le second dispositif.

12. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé de contrôle selon l'une quelconque des revendications 1 à 3 mises en oeuvre par le premier dispositif lorsque ces étapes sont exécutées sur un ordinateur, ou pour l'exécution des étapes d'un procédé de contrôle selon l'une quelconque des revendications 1 à 3 mises en oeuvre par le second dispositif lorsque ces étapes sont exécutées sur un ordinateur.

## Patentansprüche

1. Steuerungsverfahren in Bezug auf eine Kommunikation zwischen zwei Vorrichtungen, wobei das Protokoll der Kommunikation wenigstens eine erste Transaktion und wenigstens eine spätere, zweite Transaktion umfasst, wobei das Verfahren die folgenden Schritte umfasst:
- die eine der Vorrichtungen, die erste Vorrichtung, überträgt im Verlauf der ersten Transaktion an die andere Vorrichtung, die zweite Vorrichtung, eine maximale akzeptable Verzögerung zwischen dem Ende der ersten Transaktion und dem Beginn der zweiten Transaktion, und
- die zweite Vorrichtung löst einen Timer für die Verzögerung aus, **dadurch gekennzeichnet, dass** die erste Vorrichtung ferner im Verlauf der ersten Transaktion an die zweite Vorrichtung eine explizite Angabe des Nachrichtentyps überträgt, der den Beginn der zweiten Transaktion kennzeichnet.

2. Steuerungsverfahren nach Anspruch 1, **dadurch gekennzeichnet, dass**, wenn die Kommunikation wenigstens einem Dialog zugeordnet ist, die zweite Vorrichtung die Verzögerung nicht mehr berücksichtigt, wenn der Dialog von der ersten Vorrichtung vor Ablauf dieser Verzögerung freigegeben wird.

3. Steuerungsverfahren nach Anspruch 1 oder 2, **dadurch gekennzeichnet, dass** die erste Vorrichtung und die zweite Vorrichtung SIP (Session Initiation Protocol) -Agenten umfassen, und dadurch, dass der Nachrichtentyp, der den Beginn der zweiten Transaktion kennzeichnet, eine SIP-Methode ist.

4. Kommunizierende Vorrichtung, erste Vorrichtung genannt, umfassend Mittel zum, wenn sie mit einer anderen kommunizierenden Vorrichtung, zweite Vorrichtung genannt, in Kommunikation steht, wobei das Protokoll der Kommunikation wenigstens eine erste Transaktion, und wenigstens eine spätere, zweite Transaktion umfasst, Übertragen, im Verlauf der ersten Transaktion an die zweite Vorrichtung, einer maximalen akzeptablen Verzögerung zwischen dem Ende der ersten Transaktion und dem Beginn der zweiten Transaktion, **dadurch gekennzeichnet, dass** die erste Vorrichtung ferner Mittel umfasst, um im Verlauf der ersten Transaktion an die zweite Vorrichtung eine explizite Angabe des Nachrichtentyps zu übertragen, der den Beginn der zweiten Transaktion kennzeichnet.

5. Kommunizierende Vorrichtung, zweite Vorrichtung genannt, umfassend Mittel zum, wenn sie mit einer anderen kommunizierenden Vorrichtung, erste Vorrichtung genannt, in Kommunikation steht, wobei das Protokoll der Kommunikation wenigstens eine erste Transaktion und wenigstens eine spätere, zweite Transaktion umfasst:
- Empfangen, im Verlauf der ersten Transaktion von der ersten Vorrichtung, einer maximalen akzeptablen Verzögerung zwischen dem Ende der ersten Transaktion und dem Beginn der zweiten Transaktion, und
- Auslösen eines Timers für die Verzögerung,
**dadurch gekennzeichnet, dass** die zweite Vorrichtung ferner Mittel umfasst, um im Verlauf der ersten Transaktion von der ersten Vorrichtung eine explizite Angabe des Nachrichtentyps zu empfangen, der den Beginn der zweiten Transaktion kennzeichnet.

6. Kommunizierende Vorrichtung nach Anspruch 5, **dadurch gekennzeichnet, dass** sie Mittel umfasst, um, wenn die Kommunikation wenigstens einem Dialog zugeordnet ist, die Verzögerung nicht mehr zu berücksichtigen, wenn der Dialog von der ersten Vorrichtung vor Ablauf dieser Verzögerung freigegeben wird.

7. Kommunizierende Vorrichtung nach einem der Ansprüche 4 bis 6, **dadurch gekennzeichnet, dass** sie einen SIP (Session Initiation Protocol) -Agenten umfasst, und dadurch, dass der Nachrichtentyp eine SIP-Methode ist.

8. Kommunizierende Vorrichtung nach einem der Ansprüche 4 bis 7, **dadurch gekennzeichnet, dass** sie in einer Client-Vorrichtung gehostet ist.

9. Kommunizierende Vorrichtung nach einem der Ansprüche 4 bis 7, **dadurch gekennzeichnet, dass** sie in einem Server gehostet ist.

10. Kommunikationssystem umfassend wenigstens eine erste kommunizierende Vorrichtung nach Anspruch 4 und wenigstens eine zweite kommunizierende Vorrichtung nach Anspruch 5 oder 6.

11. Datenspeichermittel, das nicht entfernbar oder teilweise entfernbar oder vollständig entfernbar ist, aufweisend Computerprogrammcode-Anweisungen zur Ausführung der Schritte eines Steuerungsverfahrens nach einem der Ansprüche 1 bis 3, die von der ersten Vorrichtung durchgeführt werden, oder zur Ausführung der Schritte eines Steuerungsverfahrens nach einem der Ansprüche 1 bis 3, die von der zweiten Vorrichtung durchgeführt werden.

12. Computerprogramm, das aus einem Kommunikationsnetzwerk herunterladbar ist und/oder auf einem computerlesbaren Datenträger gespeichert ist und/oder von einem Mikroprozessor ausführbar ist, **dadurch gekennzeichnet, dass** es Anweisungen zur Ausführung der Schritte eines Steuerungsverfahrens nach einem der Ansprüche 1 bis 3, die von der ersten Vorrichtung durchgeführt werden, wenn diese Schritte auf einem Computer ausgeführt werden, oder zur Ausführung der Schritte eines Steuerungsverfahrens nach einem der Ansprüche 1 bis 3, die von der zweiten Vorrichtung durchgeführt werden, wenn diese Schritte auf einem Computer ausgeführt werden, umfasst.

## Claims

1. Control method relating to a communication between two devices, wherein the protocol of said communication comprises at least one transaction, known as the first transaction, and at least one subsequent transaction, known as the second transaction, said method comprising the following steps:
- during said first transaction one of said devices, known as the first device, transmits to the other device, known as the second device, a maximum acceptable delay time between the end of the first transaction and the start of said second transaction, and
- said second device triggers a timer for said delay time,
**characterized in that**, during said first transaction, said first device furthermore transmits to the second device an explicit indication of the type of message characterizing said start of the second transaction.

2. Control method according to Claim 1, **characterized in that**, when said communication is associated with at least one dialogue, said second device no longer takes account of said delay time if said first device releases said dialogue before this delay time has elapsed.

3. Control method according to Claim 1 or Claim 2, **characterized in that** said first device and said second device comprise SIP (Session Initiation Protocol) agents, and **in that** said type of message characterizing the start of the second transaction is an SIP method.

4. Communicating device, known as the first device, comprising means for, when it is in communication with another communicating device, known as the second device, the protocol of said communication comprising at least one transaction, known as the first transaction, and at least one subsequent transaction, known as the second transaction, transmitting to said second device during said first transaction a maximum acceptable delay time between the end of the first transaction and the start of said second transaction,
**characterized in that** said first device furthermore comprises means for transmitting to the second device during said first transaction an explicit indication of the type of message characterizing said start of the second transaction.

5. Communicating device, known as the second device, comprising means for, when it is in communication with another communicating device, known as the first device, the protocol of said communication comprising at least one transaction, known as the first transaction, and at least one subsequent transaction, known as the second transaction:
- receiving from said first device, during said first transaction, a maximum acceptable delay time between the end of the first transaction and the start of said second transaction, and
- triggering a timer for said delay time,
**characterized in that** said second device furthermore comprises means for receiving from said first device, during said first transaction, an explicit indication of the type of message characterizing said start of the second transaction.

6. Communicating device according to Claim 5, **characterized in that** it comprises means for, when said communication is associated with at least one dialogue, no longer taking account of said delay time if said first device releases said dialogue before this delay time has expired.

7. Communicating device according to any one of Claims 4 to 6, **characterized in that** it comprises an SIP (Session Initiation Protocol) agent, and **in that** said type of message is an SIP method.

8. Communicating device according to any one of Claims 4 to 7, **characterized in that** it is accommodated in a client device.

9. Communicating device according to any one of Claims 4 to 7, **characterized in that** it is accommodated in a server.

10. Communication system comprising at least one first communicating device according to Claim 4 and at least one second communicating device according to Claim 5 or Claim 6.

11. Irremovable, partially or fully removable data storage means including computer program code instructions for executing the steps, implemented by the first device, of a control method according to any one of Claims 1 to 3, or for executing the steps, implemented by the second device, of a control method according to any one of Claims 1 to 3.

12. Computer program that can be downloaded from a communication network and/or is stored on a computer-readable medium and/or can be executed by a microprocessor, **characterized in that** it comprises instructions for executing the steps, implemented by the first device, of a control method according to any one of Claims 1 to 3 when these steps are executed on a computer, or for executing the steps, implemented by the second device, of a control method according to any one of Claims 1 to 3 when these steps are executed on a computer.
